# EUROPÄISCHE PATENTSCHRIFT

(11) **EP 3 389 808 B1**
(45) Veröffentlichungstag und Bekanntmachung des Hinweises auf die Patenterteilung: **18.09.2024**
(21) Anmeldenummer: 16819872.9
(22) Anmeldetag: 16.12.2016
(51) Int. Cl.: B01D 3/20

(54) **KAMINBODEN FÜR EINE KOLONNE ZUR THERMISCHEN BEHANDLUNG VON FLUIDEN GEMISCHEN**
CHIMNEY TRAY FOR A COLUMN FOR THERMALLY TREATING FLUID MIXTURES
FOND DE CHEMINÉE POUR UNE COLONNE DE TRAITEMENT THERMIQUE DE MÉLANGES FLUIDES

(30) Priorität: 18.12.2015 DE 102015122232; 18.12.2015 US 201562269124 P
(43) Veröffentlichungstag der Anmeldung: 24.10.2018
(73) Patentinhaber: BASF SE, 67056 Ludwigshafen am Rhein (DE)
(72) Erfinder: HAMMON, Ulrich, 68163 Mannheim (DE); WALTER, Thomas, 67454 Hassloch (DE)
(74) Vertreter: BASF IP Association
(86) Internationale Anmeldenummer: PCT/EP2016/081551
(87) Internationale Veröffentlichungsnummer: WO 2017/103187

(56) Entgegenhaltungen:
- WO-A2-2008/103304
- FR-A- 392 674
- US-A- 1 605 264

## Beschreibung

Die vorliegende Erfindung betrifft einen Kaminboden für eine Kolonne zur thermischen Behandlung von fluiden Gemischen, insbesondere zur Behandlung von polymerisierbaren fluiden Gemischen, und eine Kolonne mit einem im Kolonnenhohlraum angeordneten erfindungsgemäßem Kaminboden. Der Kaminboden umfasst einen Auffangboden und zumindest zwei in dem Auffangboden horizontal beabstandete Kamine. Jeder Kamin weist einen vertikal ausgerichteten Kaminkörper auf, der eine Durchtrittsöffnung durch den Auffangboden bildet. Der Kaminkörper ist insbesondere zylindrisch. Ferner weist jeder Kamin eine beabstandet von dem Kaminkörper angeordnete Abdeckeinrichtung auf. Diese Abdeckeinrichtung überdeckt in vertikaler Richtung jeweils die Durchtrittsöffnung.

Kaminböden werden in Trennkolonnen eingesetzt. In solchen Trennkolonnen werden vielfach gasförmige (aufsteigend) und flüssige (absteigend) Stoffströme im Gegenstrom geführt, wobei wenigstens einer der Stoffströme eine polymerisierbare Verbindung, insbesondere ein (Meth)acrylmonomer enthält. Infolge der zwischen den Stoffströmen bestehenden Ungleichgewichte findet ein Wärme- und Stoffaustausch statt, der letztlich die in der Trennkolonne gewünschte Abtrennung (bzw. Auftrennung) bedingt. In dieser Schrift sollen solche Trennverfahren als thermische Trennverfahren bezeichnet werden.

Beispiele für solche thermischen Trennverfahren sind die fraktionierende Kondensation (vgl. z.B. DE 19924532 A1, DE 10243625 A1 und WO 2008/090190 A1) und die Rektifikation. Bei diesen beiden Verfahren wird eine aufsteigende Dampfphase im Gegenstrom zu einer absteigenden Flüssigphase geführt. Die Trennwirkung beruht darauf, dass die Dampfzusammensetzung im Gleichgewicht von der Flüssigzusammensetzung verschieden ist. Ein weiteres thermisches Trennverfahren ist die Absorption, bei der wenigstens ein aufsteigendes Gas zu wenigstens einer absteigenden Flüssigkeit im Gegenstrom geführt wird. Die Trennwirkung beruht auf der unterschiedlichen Löslichkeit der Gasbestandteile in der Flüssigkeit. Ein noch weiteres thermisches Trennverfahren ist die Desorption. Sie ist der Umkehrprozess zur Absorption. Dabei wird das in der Flüssigphase gelöste Gas durch Partialdruckerniedrigung abgetrennt. Wenn die Partialdruckerniedrigung des in der Flüssigphase Gelösten wenigstens teilweise dadurch erfolgt, dass ein Trägergas durch die Flüssigphase geleitet wird, bezeichnet man dieses thermische Trennverfahren auch als Strippung. Alternativ oder auch zusätzlich (zeitgleich als Kombination) kann die Partialdruckerniedrigung durch eine Absenkung des Arbeitsdruckes bewirkt werden.

Beispielsweise kann die Abtrennung von (Meth)acrylsäure bzw. (Meth)acrolein aus dem Produktgasgemisch der katalytischen Gasphasenoxidation so durchgeführt werden, dass die (Meth)acrylsäure bzw. das (Meth)acrolein durch Absorption in ein Lösungsmittel (z.B. Wasser oder ein organisches Lösungsmittel) oder durch fraktionierende Kondensation des Produktgasgemisches zunächst grundabgetrennt und das dabei anfallende Absorbat bzw. Kondensat nachfolgend unter Erhalt von mehr oder weniger reiner (Meth)acrylsäure bzw. (Meth)acrolein weiter aufgetrennt wird (vgl. z.B. DE-10332758 A1, DE 10243625 A1, WO 2008/090190 A1, DE 10336386 A1, DE 19924532 A1, DE 19924533 A1, DE 102010001228 A1, WO 2004/035514 A1, EP 1125912 A2, EP 982289 A2, EP 982287 A1 und DE 10218419 A1).

Trennkolonnen, in denen diese Trennverfahren durchgeführt werden, umfassen als trennwirksame Einbauten Stoffaustauschböden. Als Stoffaustauschböden werden insbesondere Regensiebböden eingesetzt. Bei einem Regensiebboden handelt es sich um eine Platte bzw. um zu einer Platte zusammengefügte Plattensegmente, die für die aufsteigende Gas- bzw. Dampfphase (die Begriffe "gasförmig" und "dampfförmig" werden in dieser Schrift synonym verwendet) über die Platte verteilte und im Wesentlichen plane Durchtrittsöffnungen, z.B. runde Löcher und/oder Schlitze, aufweist (vgl. z.B. DE 10230219 A1, EP 1279429 A1, US-A 3988213 und EP 1029573 A1). Darüber hinausgehende Öffnungen (z.B. wenigstens einen Ablaufschacht (wenigstens ein Ablaufsegment)) weisen Regensiebböden nicht auf. Durch diese Abwesenheit von Ablaufschächten müssen sich sowohl das in der Trennkolonne aufsteigende Gas (der in der Trennkolonne aufsteigende Dampf) als auch die in der Trennkolonne absteigende Flüssigkeit entgegengesetzt strömend im zeitlichen Wechsel durch die (gleichen) Durchtrittsöffnungen (durch die offenen Querschnitte der Durchtrittstellen) bewegen. Man spricht auch vom "dual-flow" von aufsteigendem Gas und absteigender Flüssigkeit durch die Durchtrittsöffnungen, weshalb in der Literatur für solche Stoffaustauschböden häufig auch der Begriff "Dual-Flow-Böden" verwendet wird.

Die FR 392 674 A beschreibt einen Destillationsapparat mit Böden, bei denen oberhalb von Durchführungen für Dampf Abschirmungen angeordnet sind, die weit bis zum Boden herunter reichen, um auf diese Weise den Kontakt zwischen einer Flüssigkeit und einem in Gegenrichtung durch die Durchführung strömenden Gas zu verbessern.

In US 1 605 264 A wird ein Sprudelturm beschrieben, dessen Böden Durchführungen aufweisen, durch die Gas durch Rohrelemente aufsteigt. Über diesen sind Kappen angeordnet und es sind umlaufende Wände vorgesehen, die eine Flüssigkeit stauen. Auch hier wird der Kontakt zwischen Gas und Flüssigkeit verbessert.

Bei dem in WO 2008/103304 A2 beschriebenen Boden zum Abscheiden von Flüssigkeitströpfchen aus einem Dampfstrom sind über einer Durchführung Kappen so angeordnet, dass der Dampfstrom einen S-förmigen Pfad beschreibt.

Bei Kaminböden handelt es sich um einen Boden mit einer Flüssigkeitszwangsführung. In diesem Fall ist neben den bereits beschriebenen Durchtrittsöffnungen zusätzlich wenigstens ein Ablaufschacht vorgesehen. Dabei handelt es sich z.B. um wenigstens eine Ablauföffnung, der die auf den Kaminboden abgestiegene Flüssigkeit zufließt, und die in einen zum in der Abfolge darunter liegenden Stoffaustauschboden zulaufenden Schacht ausläuft, der in der Regel zu einer in Kolonnenlängsrichtung weisenden Achse zentralsymmetrisch ausgebildet ist. Der Querschnitt des Schachts kann entlang dieser Achse variieren (sich z.B. verjüngen) oder auch konstant sein.

Durch den wenigstens einen Ablaufschacht des Kaminbodens kann innerhalb einer Abfolge von Böden die von einem höher gelegenen Kaminboden absteigende Flüssigkeit unabhängig vom nach wie vor durch die Durchtrittsöffnungen dieses Kaminbodens aufsteigenden Gas bzw. Dampf als wenigstens ein Zulauf an Flüssigkeit auf den nächst tiefer gelegenen Boden der Abfolge absteigen.

Die Kamine der Kaminböden bilden in diesem Fall die Durchtrittsöffnungen für den aufsteigenden Dampf bzw. das aufsteigende Gas. Gleichzeitig verhindern die Kamine durch Abdeckeinrichtungen wie Abdeckhauben, dass die herabregnende Flüssigkeit durch die Durchtrittsöffnungen der Kamine nach unten gelangt. Die herabregnende Flüssigkeit wird vielmehr auf dem Kaminboden gesammelt und läuft getrennt von dem aufsteigenden Dampf bzw. Gas durch den Ablaufschacht nach unten. Ein solcher Kaminboden ist beispielsweise in der DE 101 59 825 A1 beschrieben.

Bei einem Kaminboden mit mehreren nebeneinander angeordneten Kaminen ergibt sich jedoch das Problem, dass herabregnende Flüssigkeitstropfen bei der Abdeckeinrichtung eines Kamins abprallen und dann unter Umständen so abgelenkt werden, dass sie in den benachbarten Kamin gelangen können, um dort durch die Durchtrittsöffnung dieses Kamins nach unten durch den Kaminboden hindurch zu treten. Ein solcher Flüssigkeitsdurchtritt soll verhindert werden.

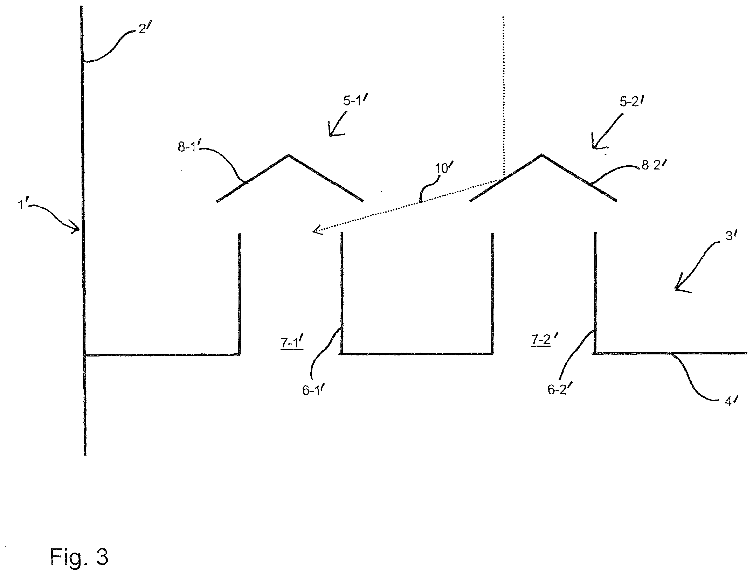

Mit Bezug zu Figur 3 wird diese Problematik von Kaminböden des Standes der Technik nochmals erläutert:
In einer Kolonne 1' ist ein Kaminboden 3' an einem Kolonnenkörper 2' befestigt. Der Kaminboden 3' weist zumindest zwei nebeneinander angeordnete Kamine 5-1' und 5-2' auf. Der erste Kamin 5-1' umfasst einen Kaminkörper 6-2', welcher eine Durchtrittsöffnung 7-1' bildet. Vertikal beabstandet von dem Kaminkörper 6-1' ist eine Abdeckeinrichtung 8-1' so angeordnet, dass sie in vertikaler Richtung die Durchtrittsöffnung 7-1' überdeckt. Auf gleiche Weise ist der zweite Kamin 5-2' ausgebildet. Er weist einen Kaminkörper 6-2' auf, der eine Durchtrittsöffnung 7-2' bildet. Vertikal beabstandet darüber ist die Abdeckeinrichtung 8-2' angeordnet. Herabregnende Flüssigkeitstropfen 10' können nun auf die Abdeckeinrichtung 8-2' aufprallen und dort in Richtung des ersten Kamins 5-1' so abgelenkt werden, dass sie durch eine Öffnung zu der Durchtrittsöffnung 7-1' gelangen, die zwischen der Abdeckeinrichtung 8-1' und dem Kaminkörper 6-1' gebildet ist.

Der vorliegenden Erfindung liegt die Aufgabe zugrunde, einen Kaminboden der eingangs genannten Art und eine Kolonne mit einem solchen Kaminboden bereitzustellen, mit welchen verhindert wird, dass herabregnende Flüssigkeit durch eine Durchtrittsöffnung eines Kamins durch den Kaminboden hindurchtreten kann.

Erfindungsgemäß wird diese Aufgabe durch einen Kaminboden mit den Merkmalen des Anspruchs 1 und die Kolonne mit den Merkmalen des Anspruchs 13 gelöst. Vorteilhafte Ausgestaltungen und Weiterbildungen ergeben sich aus den abhängigen Ansprüchen.

Der erfindungsgemäße Kaminboden umfasst eine Abschirmung, die sich um den Kaminkörper eines ersten Kamins herum erstreckt, wobei der untere Rand der Abschirmung unterhalb des oberen Rands des Kaminkörpers des ersten Kamins liegt und der obere ringförmige Rand der Abschirmung oberhalb des unteren äußeren Rands der Abdeckeinrichtung des ersten Kamins liegt oder sich an den unteren äußeren Rand der Abdeckeinrichtung des ersten Kamins anschließt.

Durch die Abschirmung des Kamins des erfindungsgemäßen Kaminbodens wird verhindert, dass Flüssigkeitstropfen, die nicht nur von oben herabregnen, sondern die an einem benachbarten Kamin oder beim Auffangboden des Kamins abprallen, zur Durchtrittsöffnung dieses Kamins gelangen können.

Die räumlichen Begriffe "oben", "unten", "horizontal" und "vertikal", beziehen sich, soweit nichts anderes ausdrücklich erwähnt ist, auf die Orientierung des Kaminbodens in einer Kolonne während des Betriebs.

Der erfindungsgemäße Kaminboden bewirkt im Wesentlichen keinen Stoffaustausch zwischen Gas und Flüssigkeit. Er dient insbesondere dem Zweck der Trennung von Gas und Flüssigkeit. Durch die Trennung der Gas- und Flüssigkeitsströme wird erreicht, dass das Gas sehr kontrolliert durch den Kaminboden nach oben strömt.

Der erfindungsgemäße Kaminboden unterscheidet sich insofern grundsätzlich von Stoffaustauschböden, wie z.B. Glockenböden. Auf Glockenböden wird Flüssigkeit zurückgehalten, z.B. mit Hilfe von Überlaufwehren, und eine größtmögliche Kontaktfläche zwischen dem aufsteigenden Gas und der zurückgehaltenen Flüssigkeit geschaffen, um einen möglichst umfassenden Stoffaustausch zwischen Gas und Flüssigkeit zu bewirken. Dies wird durch glockenförmige Abdeckungen erreicht, die das durch die Durchtrittsöffnungen des Bodens nach oben strömende Gas daran hindern, direkt nach oben aus der zurückgehaltenen Flüssigkeit auszutreten. Die unteren Ränder der Abdeckungen (oder die gesamten Abdeckungen) tauchen rings um die Durchtrittsöffnungen in die Flüssigkeit ein, so dass aufsteigendes Gas nur unter den Rändern hindurch in die umgebende Flüssigkeit entweichen kann. Glockenböden sind z.B. in den US-Patenten 1,821,619 und 2,600,710 und im Deutschen Patent 936 032 beschrieben.

Für die Abdeckeinrichtung sind vielfältige Gestaltungen denkbar. Sie sollen jeweils verhindern, dass direkt von oben herabregnende Flüssigkeitstropfen direkt in die Durchtrittsöffnung des Kamins gelangen können. Aus diesem Grund überdeckt die Abdeckeinrichtung in vertikaler Richtung die Durchtrittsöffnung. Die Abschirmung wird ferner so an die Abdeckeinrichtung angepasst, dass auch indirekt zum Kamin gelangende Flüssigkeitstropfen, die beispielsweise an anderen Flächen der Kolonne abgelenkt wurden, nicht in die Durchtrittsöffnung des Kamins gelangen können.

Die Abdeckeinrichtung kann beispielsweise eine Abdeckhaube, eine Abdeckglocke oder ein Abdeckdach sein. Die Abdeckeinrichtung bildet insbesondere ein kegelförmiges Dach, mit nach oben zeigender Spitze.

Gemäß einer Ausgestaltung des erfindungsgemäßen Kaminbodens sind zwischen dem Kaminkörper einerseits und der Abdeckeinrichtung und der Abschirmung andererseits Gasdurchtrittsbereiche gebildet. Diese Gasdurchtrittsbereiche sind bei dieser Ausgestaltung frei von Einbauten.

Solche Einbauten können nämlich den Austrag von mitgerissenen Flüssigkeitströpfchen aus dem Bereich der Kaminkörper verhindern. In den Gasdurchtrittsbereichen sind erfindungsgemäß daher insbesondere keine Einbauten, wie etwa zum Auffangen von Tröpfchen dienende Gestricke oder Gewebematten, ausgebildet oder angebracht. Das aufsteigende Gas muss somit insbesondere kein Gestrick und kein Gewebe passieren. Unter Einbauten werden dabei auch Leitelemente oder Rinnen oder dergleichen verstanden die dazu dienen, Flüssigkeit aus dem Bereich der Abdeckeinrichtungen oder der Abschirmungen abzuführen. Vorteilhafterweise weist keine der Oberflächen der Kaminkörper, der Abdeckeinrichtungen oder der Abschirmungen eine Rinne auf, insbesondere keine der Rückführung von Flüssigkeit durch den Kaminkörper in den Bereich unterhalb des Kaminbodens dienende Rinne.

An oder in solchen Einbauten lagern sich beim thermischen Behandeln von polymerisierbaren fluiden Gemischen nämlich feste Polymerisierungsprodukte ab. Die Gestricke bzw. Gewebematten würden sich mit zunehmender Verfahrensdauer immer stärker zusetzen und schon nach relativ kurzem Verfahrensbetrieb durch Polymerablagerungen verstopft. Die Rinnen würden ihre Funktion nach einiger Zeit nicht mehr erfüllen, da Polymerablagerungen den Abfluss der sich darin sammelnden Flüssigkeit erschweren würden. Sie würden letztlich durch Polymerablagerungen aufgefüllt und deshalb nicht mehr als Rinnen wirken. Die Rinnen wären außerdem nur mit erheblichem Zusatzaufwand von den sich darin sammelnden Ablagerungen zu befreien.

Während Ablagerungen an diesen sensiblen Einbauten den Verfahrensbetrieb schnell signifikant beinträchtigen, wirken sich die direkt in der Fläche oder an den Rändern von Kaminkörpern, Abdeckeinrichtung oder Abschirmung absetzende Polymerablagerungen kaum auf den Verfahrensbetrieb aus. Erst nach langer Betriebsdauer, also wenn sich sehr dicke Ablagerungen gebildet haben, wird der Betrieb deutlich beeinträchtigt. Der Verzicht auf die genannten Einbauten bewirkt also, dass die Funktion des Kaminbodens erst bei einer vergleichsweise hohen Belastung mit Polymerablagerungen nennenswert beeinträchtigt wird. Dies gewährleistet auch bei der thermischen Behandlung von polymerisierbaren Gemischen stabile und lange Intervalle kontinuierlichen Verfahrensbetriebs.

Gemäß einer weiteren Ausgestaltung des erfindungsgemäßen Kaminbodens weist dieser wenigstens eine im Auffangboden angeordnete Ablauföffnung auf, über die Flüssigkeit vom Auffangboden in einen Bereich unterhalb des Kaminbodens abführbar ist.

Hierdurch wird verhindert, dass sich zu viel Flüssigkeit auf der Auffangfläche des Kaminbodens, also auf der Oberseite des Auffangbodens, sammelt.

Die Ablauföffnung oder gegebenenfalls die mehreren Ablauföffnungen gehen vorzugsweise in den Zulauf eines Flüssigkeitsabzugs über, wobei der Flüssigkeitsabzug wiederum einen Ablauf in einen Bereich unterhalb des Kaminbodenbodens aufweist. Vorzugsweise erstreckt sich von der Ablauföffnung ein Ablaufrohr nach unten. Das Auffangbecken kann in diesem Fall als Auffangtasse ausgebildet sein, die unterhalb der unteren Öffnung des Ablaufrohrs angeordnet ist, wobei das Ablaufrohr durch eine Fläche der Auffangtasse durchtritt, die von dem oberen Rand der Auffangtasse gebildet wird, und wobei der obere Rand der Auffangtasse oberhalb des unteren Randes der unteren Öffnung des Ablaufrohrs angeordnet ist. Die vom oberen Rand der Auffangtasse gebildete Fläche ist dabei nur eine gedachte Fläche. Sie deckt sich insbesondere mit der Flüssigkeitsoberfläche, wenn die Auffangtasse mit Flüssigkeit gefüllt ist. Wenn somit die Auffangtasse mit Flüssigkeit gefüllt ist, taucht das Ablaufrohr in die in der Auffangtasse befindliche Flüssigkeit ein, so dass auf diese Weise die hydraulische Abdichtung bereitgestellt wird. Durch diese hydraulische Abdichtung wird verhindert, dass ein Bypass für das aufsteigende Gas gebildet wird. Das aufsteigende Gas kann nicht durch den Flüssigkeitsabzug an den Öffnungen des Kaminbodens vorbei nach oben strömen.

Damit die sich auf dem Auffangboden ansammelnde Flüssigkeit durch die Ablauföffnung abfließt, kann der Auffangboden eine Neigung in Richtung der Ablauföffnung aufweisen.

In bestimmten Ausführungsformen kann eine Rinne in der Auffangfläche vorgesehen sein, die eine Neigung aufweist und in die Ablauföffnung mündet.

Ein Kaminboden, der so gebaut ist, dass auf dem Auffangboden nur sehr wenig Flüssigkeit zurückgehalten wird, ist besonders universell einsetzbar. Er lässt sich mit besonderem Vorteil auch in Kolonnen verbauen, die für die thermische Behandlung polymerisierbarer Gemische bestimmt sind, oder für die eine entsprechende Verwendung jedenfalls für die Zukunft nicht ausgeschlossen werden soll.

Gemäß einer Ausgestaltung des erfindungsgemäßen Kaminbodens ist die Abdeckeinrichtung von einer Mittelachse des Kaminkörpers zu ihrem äußeren ringförmigen Rand, der in horizontaler Richtung außerhalb der von dem Kaminkörper gebildeten Durchtrittsöffnung liegt, nach unten geneigt. Hierdurch wird erreicht, dass herabregnende Flüssigkeitstropfen über die geneigte Fläche der Abdeckeinrichtung nach unten zum Auffangboden des Kaminbodens ablaufen.

Die zylindrischen, vertikal ausgerichteten Kaminkörper können verschiedene Querschnittsgeometrien haben. Beispielsweise kann der Kaminkörper im Querschnitt kreisförmig sein. Gemäß einer anderen Ausgestaltung ist der Kaminkörper im Querschnitt rechteckig, insbesondere quadratisch. Es wäre jedoch auch möglich, dass der Querschnitt ellipsenförmige oder andere runde Querschnittsformen besitzt oder andere eckige Querschnittsformen, wie beispielsweise ein gleichseitiges Vieleck. Vorteilhafterweise ist der Querschnitt der Abdeckeinrichtung geometrisch derselbe wie der Querschnitt des Kaminkörpers.

Gemäß einer ersten Alternative des erfindungsgemäßen Kaminbodens erstreckt sich die Abschirmung von dem unteren Rand der Abdeckeinrichtung des ersten Kamins vertikal nach unten bis unterhalb des oberen Rands des Kaminkörpers des ersten Kamins. In diesem Fall ist somit die Abdeckeinrichtung einteilig mit der Abschirmung ausgebildet. Hierdurch erreicht man eine besonders wirkungsvolle Abschirmung gegenüber Flüssigkeitstropfen, die seitlich in Richtung des Kamins abgelenkt werden. Der von unten aufsteigende Dampf gelangt in diesem Fall durch die Durchtrittsöffnung des Kamins durch den Kaminkörper zu der Abdeckeinrichtung. Dort wird er von der Abdeckeinrichtung sowie der Abschirmung wieder nach unten abgelenkt, bis er durch die Öffnung zwischen der Abschirmung und dem Kaminkörper in den Bereich oberhalb des Kaminbodens gelangen kann.

In diesem Fall ist das Verhältnis der Höhe des Kaminkörpers zu dem vertikalen Abstand der oberen Kante des Kaminkörpers von der unteren Kante der Abschirmung in einem Bereich von 10 bis 30, bevorzugt in einem Bereich von 10 bis 15. Dieses Verhältnis ist insbesondere 12. Durch diese Geometrie wird erreicht, dass auch Flüssigkeitstropfen, die unten auf dem Auffangboden des Kaminbodens aufprallen und wieder nach oben abgelenkt werden, nicht in die Durchtrittsöffnung des Kamins gelangen können.

Gemäß einer weiteren Ausgestaltung liegt das Verhältnis des horizontalen Abstands des Kaminkörpers von der Abschirmung zu dem vertikalen Abstand der oberen Kante des Kaminkörpers von der unteren Kante der Abschirmung in einem Bereich von 1,0 bis 1,5, wenn sich die Abschirmung von dem unteren Rand der Abdeckeinrichtung des ersten Kamins vertikal nach unten bis unterhalb des oberen Rands des Kaminkörpers des ersten Kamins erstreckt. Vorteilhafterweise liegt dieses Verhältnis in einem Bereich von 1,1 bis 1,3 und bevorzugt ist dieses Verhältnis 1,2. Auch durch diese Geometrie des Kaminkörpers zu der Abschirmung wird verhindert, dass unten aufprallende Flüssigkeitstropfen nach oben durch den Zwischenraum zwischen der Abschirmung und dem Kaminkörper hindurch zur Durchtrittsöffnung des Kamins gelangen können.

Bei einer zweiten Alternative des erfindungsgemäßen Kaminbodens liegt der obere ringförmige Rand der Abschirmung oberhalb des unteren Rands der Abdeckeinrichtung des ersten Kamins und die Abschirmung ist horizontal beabstandet von der Abdeckeinrichtung. In diesem Fall sind somit die Abdeckeinrichtung und die Abschirmung zweiteilig ausgebildet. Bei dieser Alternative kann vorteilhafterweise von unten hindurchtretender Dampf zwischen der Abdeckeinrichtung und der Abschirmung sowohl nach oben als auch nach unten strömen und in den Bereich oberhalb des Kaminbodens gelangen. Die Dampfdurchlässigkeit dieses Kamins ist somit verbessert. Außerdem gelangt der Dampf über verschiedene Öffnungen in den Bereich oberhalb des Kaminbodens. Gleichzeitig ist die Lage der Abschirmung relativ zu der Abdeckeinrichtung und dem Kaminkörper so gestaltet, dass keine Flüssigkeitstropfen in die Durchtrittsöffnung des Kamins gelangen können.

Bei dieser Alternative liegt das Verhältnis der Höhe des Kaminkörpers zu dem vertikalen Abstand der oberen Kante des Kaminkörpers von der unteren Kante der Abschirmung in einem Bereich von 15 bis 40, vorteilhafterweise in einem Bereich von 20 bis 30 und insbesondere bei einem Wert von 22 oder 28. Durch diese Geometrie des Kamins wird wirkungsvoll verhindert, dass Tropfen, die unten auf den Auffangboden des Kaminbodens aufprallen und nach oben abgelenkt werden, durch die Öffnung zwischen dem Kaminkörper und der Abschirmung hindurch zur Durchtrittsöffnung des Kamins gelangen können.

Des Weiteren ist das Verhältnis des horizontalen Abstands des Kaminkörpers von der Abschirmung zu dem vertikalen Abstand der oberen Kante des Kaminkörpers von der unteren Kante der Abschirmung in einem Bereich von 2,0 bis 4,0, bevorzugt in einem Bereich von 2,5 bis 3,4 und insbesondere bei einem Wert von 2,6 oder 3,2, wenn der obere ringförmige Rand der Abdeckeinrichtung des ersten Kamins liegt und die Abschirmung horizontal beabstandet von der Abdeckeinrichtung ist. Auch hierdurch wird wirkungsvoll verhindert, dass nach oben bei dem Auffangboden abgelenkte Flüssigkeitstropfen in die Durchtrittsöffnung des Kamins gelangen können.

Gemäß einer Weiterbildung des erfindungsgemäßen Kaminbodens liegt der obere ringförmige Rand der Abschirmung oberhalb des unteren Rands und unterhalb des höchsten Punkts der Abdeckeinrichtung des ersten Kamins, wenn der obere ringförmige Rand der Abschirmung oberhalb des unteren Rands der Abdeckeinrichtung des ersten Kamins liegt und die Abschirmung horizontal beabstandet von der Abdeckeinrichtung ist. Diese Gestaltung erzielt einen Kompromiss zwischen einer wirkungsvollen Abschirmung und einer möglichst geringen Ausdehnung der Abschirmung, um einen möglichst guten Dampfdurchtritt zu gewährleisten.

Wenn der obere ringförmige Rand der Abschirmung oberhalb des unteren Rands der Abdeckeinrichtung des ersten Kamins liegt und die Abschirmung horizontal beabstandet von der Abdeckeinrichtung ist, liegt in diesem Fall das Verhältnis des horizontalen Abstands des höchsten Punktes der Abdeckeinrichtung des benachbarten Kamins, der oberhalb der oberen Kante der Abschirmung liegt, zu dem vertikalen Abstand der oberen Kante der Abschirmung von dem höchsten Punkt der Abdeckeinrichtung des benachbarten Kamins, der oberhalb der oberen Kante der Abschirmung liegt, in einem Bereich von 20 bis 60, vorteilhafterweise in einem Bereich von 40 bis 50 und bevorzugt bei einem Wert von 48,5. Hierdurch wird bei dem zweiten Ausführungsbeispiel wirkungsvoll verhindert, dass Tropfen, die von der Abdeckeinrichtung des benachbarten Kamins abprallen, zu der Durchtrittsöffnung des ersten Kamins gelangen können.

Gemäß einer Weiterbildung des erfindungsgemäßen Kaminbodens liegt das Verhältnis aus der Querschnittsfläche, die von dem Kaminkörper gebildet wird, zu der Querschnittsfläche, die zwischen der Abschirmung und dem Kaminkörper gebildet wird in einem Bereich von 0,5 bis 10, insbesondere in einem Bereich von 1 bis 5. Hierdurch wird ein zu hoher Druckverlust des Kaminbodens und gleichzeitig eine Rückströmung von Flüssigkeitsbestandteilen aus dem oberen Teil der Kolonne durch den Kaminboden in allen Betriebszuständen vermieden.

Die erfindungsgemäße Kolonne zur thermischen Behandlung eines fluiden Gemischs umfasst einem zylindrischen, vertikal ausgerichteten Kolonnenkörper, der einen Kolonnenhohlraum bildet. Die Kolonne ist gekennzeichnet durch einen im Kolonnenhohlraum angeordneten Kaminboden wie er vorstehend beschrieben wurde.

Der Kolonnenkörper der Kolonne weist insbesondere eine in dem Kolonnenkörper oberhalb des Auffangbodens oder zwischen einer Stirnfläche des Auffangbodens und dem Kolonnenkörper angeordnete Ablauföffnung auf, über die Flüssigkeit vom Auffangboden in einen Bereich unterhalb des Kaminbodens abführbar ist. Hierdurch wird verhindert, dass sich zu viel Flüssigkeit auf der Auffangfläche des Kaminbodens, also auf der Oberseite des Auffangbodens, sammelt, wie es vorstehend beschrieben wurde.

Die Ablauföffnung ist insbesondere in dem Kolonnenkörper unmittelbar oberhalb des tiefsten Bereichs der vom Auffangboden gebildeten Auffangfläche angeordnet.

Gemäß einer anderen Ausgestaltung liegt das Verhältnis des vertikalen Abstands des tiefsten Bereichs der Auffangfläche von der unteren Kante der Ablauföffnung zu dem vertikalen Abstand des tiefsten Bereichs der Auffangfläche von der unteren Kante der Abschirmung in einem Bereich von 0 bis 0,5, insbesondere in einem Bereich von 0 bis 0,3, bevorzugt in einem Bereich von 0 bis 0,1.

Je weiter unten die Ablauföffnung und insbesondere deren untere Kante angeordnet ist, desto niedriger ist der Flüssigkeitsstand auf dem erfindungsgemäßen Kaminboden. Unter der unteren Kante der Ablauföffnung versteht man den tiefsten Punkt der Ablauföffnung, den Flüssigkeit beim Einströmen in die Ablauföffnung mindestens überwinden muss.

Vorzugsweise ist die Ablauföffnung oder sind die Ablauföffnungen so weit unten angebracht, dass die sich auf der Auffangfläche sammelnde Flüssigkeit nur so weit steigt, dass das Durchtreten des Gases im Bereich der Abdeckungen und Abschirmungen von der Flüssigkeit nicht erschwert wird.

Die Ablauföffnung oder gegebenenfalls die mehreren Ablauföffnungen gehen vorzugsweise in den Zulauf eines Flüssigkeitsabzugs über, wobei der Flüssigkeitsabzug wiederum einen Ablauf in einen Bereich unterhalb des Kaminbodenbodens aufweist. Vorzugsweise erstreckt sich von der Ablauföffnung ein Ablaufrohr nach unten. Der Flüssigkeitsabzug kann insbesondere ein siphonartig ausgebildetes Ablaufrohr umfassen. Dieses siphonartig ausgebildete Ablaufrohr stellt auf einfache Weise einen hydraulischen Verschluss für das aufsteigende Gas bereit.

Bei der thermischen Behandlung von polymerisierbaren fluiden Gemischen versucht man im Allgemeinen, keine Flüssigkeit auf dem Auffangboden zurückzuhalten. Dies gilt insbesondere, wenn der erfindungsgemäße Kaminboden sich im unteren Bereich einer Kolonne befindet, in dem die Temperatur so hoch ist, dass eine unerwünschte Bildung von Dimeren oder höheren Oligomeren besonders leicht erfolgt. Die unerwünschte Dimerisierung bzw. Oligomerisierung würde insgesamt verstärkt, wenn man ständig ein (unnötig großes), auf dem Auffangboden stehendes Flüssigkeitsvolumen, hohen Temperaturen aussetzen würde. Dies wird durch die Ablauföffnung des erfindungsgemäßen Kaminbodens bzw. der erfindungsgemäßen Kolonne verhindert.

Im Folgenden wird ein Ausführungsbeispiel des erfindungsgemäßen Kaminbodens mit Bezug zu den Zeichnungen erläutert.
Figur 1 zeigt schematisch eine Teilansicht des ersten Ausführungsbeispiels des erfindungsgemäßen Kaminbodens,
Figur 2 zeigt schematisch eine Teilansicht des zweiten Ausführungsbeispiels des erfindungsgemäßen Kaminbodens,
Figur 3 zeigt schematisch eine Teilansicht eines bekannten Kaminbodens,
Figur 4 zeigt einen Ausschnitt eines erfindungsgemäßen Kaminbodens und
Figur 5 zeigt schematisch einen Querschnitt des unteren Bereichs einer erfindungsgemäßen Kolonne.

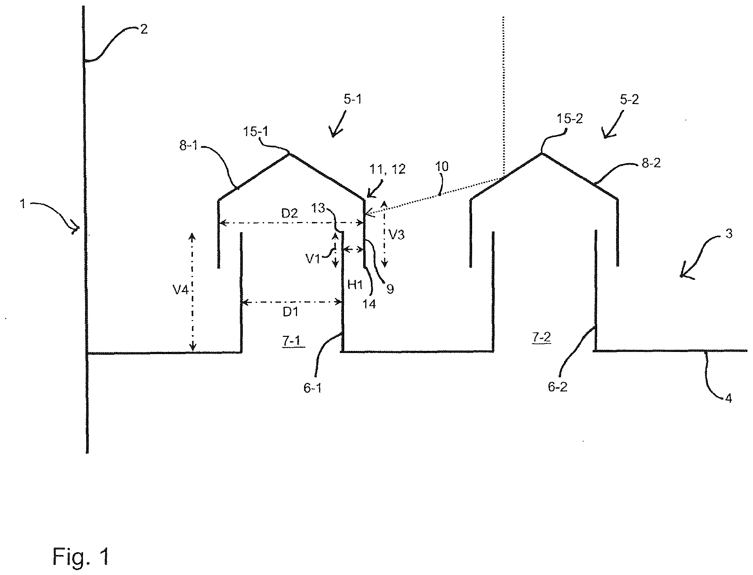

Es wird darauf hingewiesen, dass die Darstellungen der Figuren 1 bis 5 nicht maßstabgetreu sind. Sie sollen die Geometrie der Kamine der Kaminböden veranschaulichen und die Bezeichnungen der Teile des Kaminbodens wiedergeben. In Figuren 1 bis 4 ist jeweils eine Teilansicht eines Kaminbodens gezeigt, der in einem vertikal ausgerichteten Kolonnenkörper 2 einer Kolonne 1, insbesondere einer Trennkolonne, montiert ist. Der Kaminboden kann dabei eine Vielzahl der dargestellten Kamine umfassen, wie es beispielsweise in der DE 101 59 825 A1 gezeigt ist.

Mit Bezug zu Figur 1 wird ein erstes Ausführungsbeispiel des erfindungsgemäßen Kaminbodens 3 erläutert:
Der Kaminboden 3 ist horizontal in einem vertikal ausgerichteten Kolonnenkörper 2 einer Kolonne 1 montiert. Der Kaminboden 3 umfasst einen Auffangboden 4, auf dem sich von oben herabregnende Flüssigkeit ansammeln kann. Diese Flüssigkeit wird über einen nicht gezeigten Ablaufschacht oder eine Öffnung in der Kolonnenwand abgeführt. Der Kaminboden 3 weist mehrere Kamine auf, von denen in Figur 1 zwei benachbarte Kamine 5-1 und 5-2 gezeigt sind. Jeder Kamin umfasst einen zylindrischen, vertikal ausgerichteten Kaminkörper 6-1 bzw. 6-2, welche die Durchtrittsöffnungen 7-1 bzw. 7-2 bilden. Die Querschnittslinie der Kaminkörper 6-1 bzw. 6-2 ist kreisförmig. Die Querschnittslinie könnte jedoch auch eine andere Form, wie beispielsweise eine Rechteckform, besitzen. Die Durchtrittsöffnungen 7-1 und 7-2 dienen zum Durchtritt aufsteigenden Dampfes. Ein Durchtritt von Flüssigkeit durch diese Durchtrittsöffnungen 7-1 und 7-2 soll verhindert werden. Hierfür sind oberhalb der Kaminkörper 6-1 bzw. 6-2 Abdeckeinrichtungen 8-1 bzw. 8-2 über den Kaminkörpern 6-1 bzw. 6-2 angeordnet. Die Abdeckeinrichtungen 8-1 bzw. 8-2 sind dabei vertikal beabstandet von den Kaminkörpern 6-1 bzw. 6-2, so dass von unten aufsteigender Dampf in den Bereich oberhalb des Kaminbodens 3 gelangen kann. Ferner überdecken die Abdeckeinrichtungen 8-1 bzw. 8-2 in vertikaler Richtung die Durchtrittsöffnungen 7-1 bzw. 7-2, um zu verhindern, dass herabregnende Flüssigkeitstropfen direkt durch die Durchtrittsöffnungen 7-1 bzw. 7-2 durchtreten können. Derartige Kamine sind an sich bekannt.

Zumindest einer der Kamine des erfindungsgemäßen Kaminbodens 3 weist erfindungsgemäß eine Abschirmung 9 auf. Bevorzugt weisen alle Kamine des Kaminbodens 3 diese Abschirmung 9 auf. Im Folgenden wird die Abschirmung 9 jedoch nur in Bezug auf den Kamin 5-1 erläutert.

Bei der Abdeckeinrichtung 8-1 des Kamins 5-1 handelt es sich um einen Kegel, dessen Spitze nach oben zeigt und der einen unteren, äußeren, kreisringförmigen Rand 12 bildet. Der Durchmesser D2 dieses kreisringförmigen Randes 12 ist 980 mm. Der Kaminkörper 6-1 besitzt auch einen kreisförmigen Querschnitt mit einem Durchmesser D1 von 810 mm. Die kegelförmige Abdeckeinrichtung 8-1 ist mittig über dem Kaminkörper 6-1 angeordnet. Die Mittelachse des Kaminkörpers 6-1 schneidet somit die Spitze der kegelförmigen Abdeckeinrichtung 8-1.

Zwischen dem Kaminkörper 6-1 einerseits und der Abdeckeinrichtung 8-1 und der Abschirmung 9 andererseits werden Gasdurchtrittsbereiche gebildet. Hierdurch strömt aufsteigendes Gas bzw. Dampf in den Bereich oberhalb des Kaminbodens 3. Die Gasdurchtrittsbereiche sind frei von Einbauten.

Bei dem in Figur 1 gezeigten ersten Ausführungsbeispiel erstreckt sich die Abschirmung 9 von dem unteren Rand 12 der Abdeckeinrichtung 8-1 vertikal nach unten bis unterhalb des oberen Randes 13 des Kaminkörpers 6-1. Auf diese Weise wird zwischen dem unteren Teil der Abschirmung 9 und dem Kaminkörper 6-1 eine ringförmige, im vorliegenden Fall kreisringförmige, zylindrische Öffnung gebildet, wobei der horizontale Abstand H1 des Kaminkörpers 6-1 von der Abschirmung 9 85 mm ist. Die Abschirmung 9 ist bildet somit einen vertikalen, zum Kaminkörpern 6-1 konzentrischen Ring.

Bei dem Einsatz des Kaminbodens 3 in einer Kolonne 1 zur thermischen Behandlung von fluiden Gemischen ist außerdem das Verhältnis aus der Querschnittsfläche, die von dem Kaminkörper 6-1 gebildet wird, zu der Querschnittsfläche, die zwischen der Abschirmung 9 und dem Kaminkörper 6-1 gebildet wird, d. h. im vorliegenden Fall die Querschnittsfläche des konzentrischen Rings, wichtig. Durch die von dem Kaminkörper 6-1 gebildete Querschnittsfläche strömt Gas in den Kamin 5-1 ein, durch die zwischen der Abschirmung 9 und dem Kaminkörper 6-1 gebildete Querschnittsfläche strömt Gas aus dem Kamin 5-1 aus. Dieses Verhältnis liegt im Bereich von 0,5 bis 10, bevorzugt von 1 bis 5. Im beschriebenen Ausführungsbeispiel ist dieses Verhältnis 3. Insofern ist die Figur 1 nicht maßstabsgetreu. Bei höheren Verhältnissen wird die Strömungsgeschwindigkeit so hoch, dass es Flüssigkeitstropfen zwar schwer haben werden, sich entgegen dem Gasstrom zu bewegen. Dies hat dann allerdings den Nachteil, dass ein zu hoher Druckverlust bei dem Kaminboden auftritt.

Des Weiteren ist der vertikale Abstand V1 der oberen Kante 13 des Kaminkörpers 6-1 von der unteren Kante 14 der Abschirmung 970 mm. Die vertikale Länge V3 der Abschirmung 9 beträgt 300 mm und die Höhe V4 des Kaminkörpers 6-1 beträgt 811 mm. Diese Höhe ist die vertikale Erstreckung des Kaminkörpers 6-1 über dem Auffangboden 4. Gegebenenfalls kann der Kaminkörper auch durch den Auffangboden 4 durchtreten und sich weiter nach unten erstrecken.

Für die Wirksamkeit der Abschirmung 9 gegenüber Flüssigkeitstropfen 10, die bei der Abdeckeinrichtung 8-2 des benachbarten Kamins 5-2 in Richtung des Kamins 5-1 abprallen, und für Flüssigkeitstropfen, die gegebenenfalls von dem Auffangboden 4 nach oben abgelenkt werden, sind bestimmte geometrische Verhältnisse der Abschirmung 9 zu den weiteren Teilen des Kamins 5-1 relevant. Im in Figur 1 gezeigten Ausführungsbeispiel besitzt das Verhältnis V4/V1 der Höhe V4 des Kaminkörpers 6-1 zu dem vertikalen Abstand V1 der oberen Kante 13 des Kaminkörpers 6-1 von der unteren Kante 14 der Abschirmung 9 den Wert 12.

Des Weiteren besitzt das Verhältnis H1/V1 des horizontalen Abstands H1 des Kaminkörpers 6-1 von der Abschirmung 9 zu dem vertikalen Abstand V1 der oberen Kante 13 des Kaminkörpers 6-1 von der unteren Kante 14 der Abschirmung 9 bei dem Wert 1,2.

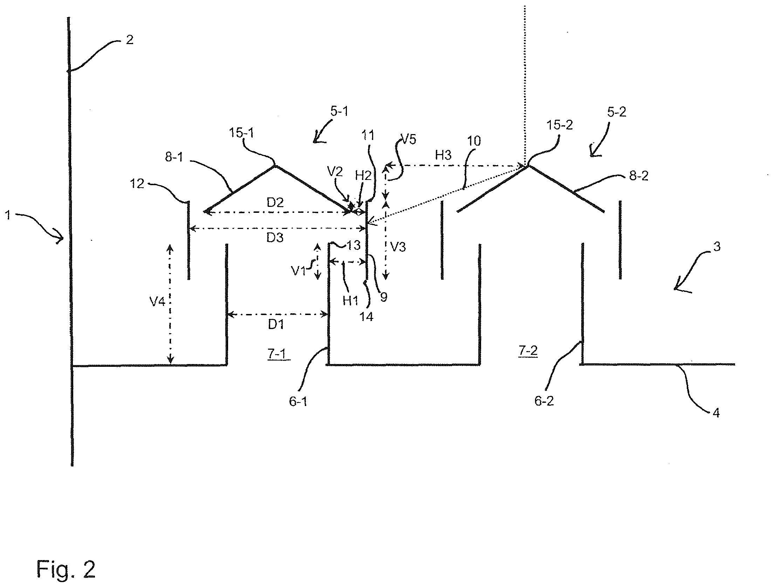

Mit Bezug zu Figur 2 wird ein zweites Ausführungsbeispiel des erfindungsgemäßen Kaminbodens 3 erläutert:
Der Kaminboden 3 des zweiten Ausführungsbeispiels unterscheidet sich von dem in Figur 1 gezeigten Kaminboden 3 des ersten Ausführungsbeispiels dadurch, dass die Abschirmung 9 horizontal beabstandet von der Abdeckeinrichtung 8-1 angeordnet ist. Die Kamine 5-1 des zweiten Ausführungsbeispiels werden insbesondere dann verwendet, wenn der Druckverlust des durchströmenden Gases minimiert werden muss. Bei dieser Ausführungsform stellt sich ein etwas geringer Druckverlust ein, da der gasseitige Strömungsquerschnitt des aus den Kaminen 5-1 ausströmenden Gases in der Regel größer ist.

Auch bei diesem Ausführungsbeispiel sind zwischen dem Kaminkörper 6-1, der Abdeckeinrichtung 8-1 und der Abschirmung 9 Gasdurchtrittsbereiche gebildet. Auch in diesem Fall sind diese Gasdurchtrittsbereiche frei von Einbauten.

Bei dem zweiten Ausführungsbeispiel ist der Durchmesser D1 des Kaminkörpers 6-1 740 mm und der Durchmesser D2 beim unteren Rand 12 der Abdeckeinrichtung 8-1 915 mm. Der Durchmesser D3 der Abschirmung 9 ist in diesem Fall größer als der Durchmesser D2 der Abdeckeinrichtung 8-1. Er beträgt 1200 mm. Sowohl die Abdeckeinrichtung 8-1 als auch die Abschirmung 9 sind mittig bzw. konzentrisch zu dem Kaminkörper 6-1 angeordnet. Der vertikale Ring der Abschirmung 9 ist in horizontaler Richtung somit sowohl von dem Kaminkörper 6-1 als auch von dem unteren Rand 12 der Abdeckeinrichtung 8-1 beabstandet angeordnet. Der horizontale Abstand H1 zwischen dem Kaminkörper 6-1 und der Abschirmung 9 ist in diesem Fall 230 mm. Der horizontale Abstand H2 zwischen dem unteren, äußeren Rand 12 der Abdeckeinrichtung 8-1 und der Abschirmung 9 ist 87,5 mm.

Der vertikale Abstand V1 der oberen Kante 13 des Kaminkörpers 6-1 von der unteren Kante 14 der Abschirmung 9 ist in diesem Fall 90 mm. Außerdem ergibt sich bei dem zweiten Ausführungsbeispiel ein vertikaler Abstand V2 des unteren äußeren Randes 12 der Abdeckeinrichtung 8-1 von der oberen Kante 11 der Abschirmung 9. Dieser vertikale Abstand V2 ist 40 mm, wobei die obere Kante 11 der Abschirmung 9 oberhalb des unteren äußeren Randes 11 der Abdeckeinrichtung 8-1 angeordnet ist. Die vertikale Länge V3 der Abschirmung 9 ist in diesem Fall 451 mm und die Höhe V4 des Kaminkörpers 6-1 ist 1980 mm.

Da bei dem zweiten Ausführungsbeispiel eine obere Öffnung zwischen der Abschirmung 9 und der Abdeckeinrichtung 8-1 entsteht, ist bei dem zweiten Ausführungsbeispiel auch die vertikale Länge V5 des höchsten Punktes 15-2 des benachbarten Kamins 5-2 von der oberen Kante 11 der Abschirmung 9 relevant. Im zweiten Ausführungsbeispiel sind der höchste Punkt 15-1 des Kamins 5-1 und der höchste Punkt 15-2 des Kamins 5-2 auf derselben Höhe angeordnet. Wenn sich die obere Kante 11 der Abschirmung 9 bis zum höchsten Punkt 15-2 des benachbarten Kamins 5-2 erstreckt, ist diese vertikale Länge V5 gleich Null. In dem in Figur 2 gezeigten Beispiel ist die obere Kante 11 der Abschirmung 9 jedoch nur geringfügig höher als der untere Rand 12 der Abdeckeinrichtung 8-1. Bei dem zweiten Ausführungsbeispiel soll die obere Kante 11 der Abschirmung 9 jedoch bis zur Hälfte zwischen dem höchsten Punkt 15-1 des Kamins 5-1 und dem unteren Rand 12 der Abdeckeinrichtung 8-1 dieses Kamins 5-1 reichen. Die vertikale Länge V5 ist in diesem Fall 20 mm, da die höchsten Punkte 15-1 und 15-2 der beiden Kamine 5-1 und 5-2 dieselbe Höhe haben.

Des Weiteren ist in diesem Fall der horizontale Abstand H3 des höchsten Punktes 15-2 des benachbarten Kamins 5-2, der oberhalb der oberen Kante 11 der Abschirmung 9 des Kamins 5-1 liegt, von der Abschirmung 9 des Kamins 5-1 relevant. Dieser horizontale Abstand H3 ist im zweiten Ausführungsbeispiel 970 mm.

Für eine wirksame Abschirmung der Durchtrittsöffnung 7-1 des Kamins 5-1 sind bestimmte geometrische Verhältnisse der Abschirmung 9 relativ zu der Abdeckeinrichtung 8-1 und dem Kaminkörper 6-1 relevant.

Im zweiten Ausführungsbeispiel ist das Verhältnis V4/V1 der Höhe V4 des Kaminkörpers 6-1 zu dem vertikalen Abstand V1 der oberen Kante 13 des Kaminkörpers 6-1 von der unteren Kante der Abschirmung 9 bei einem Wert von 22.

Des Weiteren besitzt das Verhältnis H1/V1 des horizontalen Abstands H1 des Kaminkörpers 6-1 von der Abschirmung 9 zu dem vertikalen Abstand V1 der oberen Kante 13 des Kaminkörpers 6-1 von der unteren Kante 14 der Abschirmung 9 einen Wert von 2,6.

Ferner besitzt das Verhältnis H2/V2 des horizontalen Abstands des unteren Randes 12 der Abdeckeinrichtung 8-1 von der Abschirmung 9 zu dem vertikalen Abstand V2 der oberen Kante 11 der Abschirmung 9 von dem unteren Rand 12 der Abdeckeinrichtung 8-2 einen Wert von 2,2.

Außerdem besitzt das Verhältnis H3/V5 des horizontalen Abstands H3 des höchsten Punktes 15-2 der Abdeckeinrichtung 8-2 oder des benachbarten Kamins 5-2, der oberhalb der oberen Kante 11 der Abschirmung 9 liegt, zu dem vertikalen Abstand V5 der oberen Kante 11 der Abschirmung 9 von dem höchsten Punkt 15-2 einen Wert von 48,5.

Schließlich ist das Verhältnis aus der Querschnittsfläche, die von dem Kaminkörper 6-1 gebildet wird, zu der Querschnittsfläche, die zwischen der Abschirmung 9 und dem Kaminkörper 6-1 gebildet wird, in einem Bereich von 0,5 bis 10, bevorzugt von 1 bis 5. Im beschriebenen Ausführungsbeispiel ist dieses Verhältnis 2. Insofern ist die Figur 2 nicht maßstabsgetreu. Das Verhältnis kann kleiner als im ersten Ausführungsbeispiel sein, da das Gas bei dem Kamin 5-1 des zweiten Ausführungsbeispiels auch noch durch einen oberen Ringspalt zwischen dem unteren, äußeren Rand 12 der Abdeckeinrichtung 8-1 und der Abschirmung 9 strömen kann.

Bei einer Variante des zweiten Ausführungsbeispiels ist der Durchmesser D1 850 mm, der Durchmesser D2 1025 mm und der Durchmesser D3 1300 mm. Der vertikale Abstand V1 ist in diesem Fall 70 mm, der vertikale Abstand V2 40 mm, die vertikale Länge V3 der Abschirmung 9 ist 465 mm und die Höhe V4 des Kaminkörpers 8-1 ist 1980 mm. Der horizontale Abstand H1 ist in diesem Fall 225 mm und der horizontale Abstand H2 beträgt 87,5 mm. Das Verhältnis V4/V1 ist in diesem Fall 28, das Verhältnis H1/V1 ist in diesem Fall 3,2 und das Verhältnis H2/V2 ist in diesem Fall 2,2.

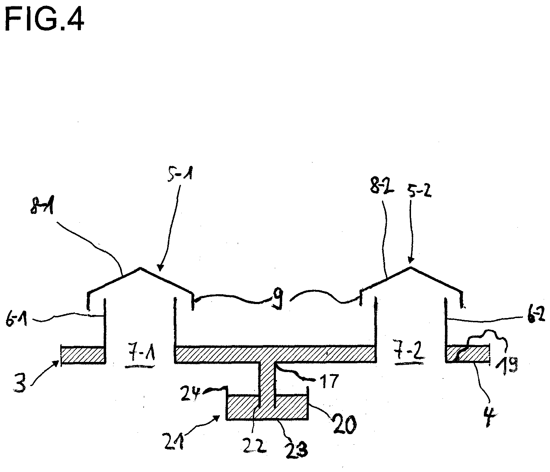

Figur 4 zeigt eine Variante des Kaminbodens 3 der vorstehend beschriebenen Ausführungsbeispiele. Der Durchmesser des Kaminbodens 3 beträgt z. B. 7,4 m, so dass er horizontal im Kolonneninnenraum am Kolonnenkörper 2 befestigt werden kann. Der Kaminboden 3 umfasst insgesamt zwölf Kamine (von denen nur zwei dargestellt sind). Die Durchtrittsöffnungen 7-1, 7-1 der Kamine 5-1, 5-2 besitzen einen kreisförmigen Umfang und einen Durchmesser von 810 mm. Der Anteil der von den Durchtrittsöffnungen 7-1, 7-1 gebildeten Fläche an der Gesamtfläche des Kaminbodens 3 beträgt somit 14%.

Oberhalb der Kaminkörper 6-1, 6-2 befindet sich vertikal beabstandet eine Abdeckeinrichtung 8-1, 8-2 welche die Durchtrittsöffnung 7-1, 7-2 in vertikaler Richtung jeweils überdeckt. Der obere ringförmige Rand der jeweiligen Abschirmung 9 schließt sich an den unteren äußeren Rand der jeweiligen Abdeckeinrichtung 8-1, 8-2 an, wie es mit Bezug zu dem ersten Ausführungsbeispiel beschrieben wurde. Die Abschirmung 9 könnte jedoch auch wie im zweiten Ausführungsbeispiel beschrieben ausgestaltet sein.

In der Mitte des Kaminbodens 3 ist ein Flüssigkeitsabzug 21 angeordnet. Der Flüssigkeitsabzug 21 umfasst eine kreisförmige Ablauföffnung 17, von welcher sich ein Ablaufrohr nach unten erstreckt. Über das Ablaufrohr kann Flüssigkeit, welche sich auf der vom Auffangboden 4 gebildeten Auffangfläche 19 ansammelt, nach unten ablaufen. Hierfür kann der Auffangboden 4 in Richtung der Ablauföffnung 17 geneigt ausgebildet sein. Unterhalb des Ablaufrohrs befindet sich eine Auffangtasse 20, welche ein Auffangbecken für Flüssigkeit bildet. Der untere Rand 22 der unteren Öffnung des Ablaufrohrs ist dabei vertikal beabstandet von dem Boden 23 der Auffangtasse 20 angeordnet. Ferner ist der obere Rand 24 der Auffangtasse 20 oberhalb des unteren Randes 22 des Ablaufrohrs angeordnet. Flüssigkeit, die durch das Ablaufrohr nach unten in die Auffangtasse 20 fließt, sammelt sich dort, so dass der Flüssigkeitsspiegel bis zum oberen Rand 24 der Auffangtasse 20 ansteigt. Danach läuft die Flüssigkeit von der Auffangtasse 20 über den oberen Rand 24 über und gelangt anschließend in den Bereich unterhalb des Kaminbodens 3. In diesem Zustand taucht das Ablaufrohr in die Flüssigkeit ein, welche sich in der Auffangtasse 20 befindet. Das Ablaufrohr tritt somit durch eine gedachte Fläche der Auffangtasse 20 durch, die von dem oberen Rand 24 der Auffangtasse 20 gebildet wird. Auf diese Weise wird eine hydraulische Abdichtung bereitgestellt, die verhindert, dass von unten aufsteigendes Gas durch die Öffnung des Ablaufrohrs nach oben durch den Kaminboden 3 durchtreten kann. Es wird somit sichergestellt, dass das nach oben steigende Gas nur durch die Durchtrittsöffnungen 7-1, 7-2 der Kamine 5-1, 5-2 nach oben steigt.

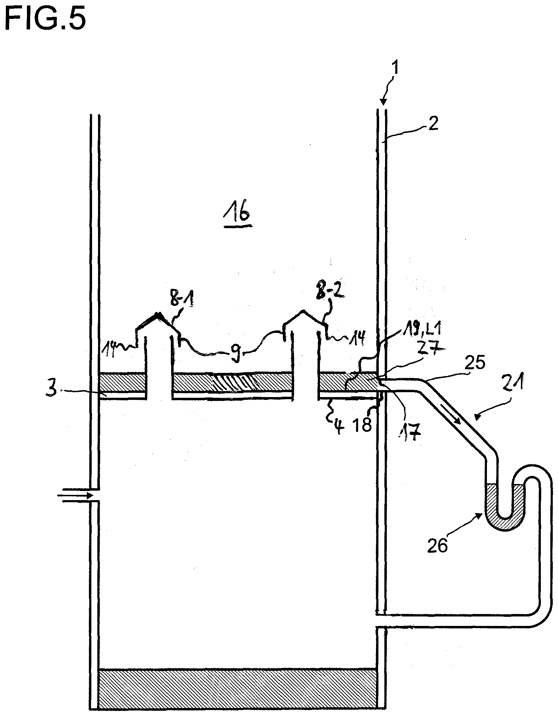

In Figur 5 ist schematisch ein anderes Beispiel für den Flüssigkeitsabzug 21 mit der hydraulischen Abdichtung gezeigt:
In diesem Fall weist der Kaminboden 3 keinen Flüssigkeitsabzug 21 in der Mitte auf. Dieser Flüssigkeitsabzug 21 ist vielmehr im Kolonnenkörper 2 gebildet. Hierfür ist im Kolonnenkörper 2 unmittelbar oberhalb der Auffangfläche 19 des Auffangbodens 4 eine Ablauföffnung 17 vorgesehen. An die Ablauföffnung schließt sich ein Rohr 25 an, welches in ein siphonartig ausgebildetes Ablaufrohr 26 übergeht. Im Anschluss daran mündet das Ablaufrohr wieder in den Kolonnenhohlraum 16 unterhalb des Kaminbodens 3. Auf diese Weise kann Flüssigkeit 27, welche sich auf der Auffangfläche 19 des Kaminbodens 3 ansammelt, über den Flüssigkeitsabzug 21 abgeführt und z. B. dem Kolonnensumpf zugeführt werden. Die Ablauföffnung 17 ist so weit unten angeordnet, dass die Flüssigkeit nicht bis in die Nähe der unteren Kante 14 der Abschirmungen 9 ansteigen kann. Die untere Kante 18 der Ablauföffnung 17 ist auf Höhe der nicht geneigten Auffangfläche 19 angeordnet. Die Ablauföffnung 17 ist demnach so im Kolonnenkörper 2 angeordnet, dass das Verhältnis des vertikalen Abstands des tiefsten Bereichs der Auffangfläche 4 von der unteren Kante 18 der Ablauföffnung zu dem vertikalen Abstand des tiefsten Bereichs der Auffangfläche 4 von der unteren Kante 14 der Abschirmung 9 exakt 0 beträgt. Da der Auffangboden 4 nicht geneigt ist, entspricht die gesamte Auffangfläche 19 zugleich dem tiefsten Bereichs L1 der Auffangfläche 19.

### Bezugszeichenliste:

- 1: Kolonne
- 2: Kolonnenkörper
- 3: Kaminboden
- 4: Auffangboden
- 5-1, 5-2: Kamine
- 6-1, 6-2: Kaminkörper
- 7-1, 7-2: Durchtrittsöffnungen
- 8-1, 8-2: Abdeckeinrichtungen
- 9: Abschirmung
- 10: Flüssigkeitstropfen
- 11: obere Kante der Abschirmung 9
- 12: unterer Rand der Abdeckeinrichtung 8-1
- 13: obere Kante des Kaminkörpers 6-1
- 14: untere Kante der Abschirmung 9
- 15-1, 15-2: höchste Punkte der Kamine 5-1 bzw. 5-2
- 16: Kolonnenhohlraum
- 17: Ablauföffnung
- 18: unteren Kante der Ablauföffnung 18
- 19: vom Auffangboden 4 gebildete Auffangfläche
- 20: Auffangtasse
- 21: Flüssigkeitsabzug
- 22: unterer Rand der unteren Öffnung des Ablaufrohrs
- 23: Boden der Auffangtasse 20
- 24: oberer Rand der Auffangtasse 20
- 25: Ablaufrohr
- 26: siphonartig ausgebildetes Rohr
- 27: Flüssigkeit
- L1: tiefster Bereich der Auffangfläche 19

## Patentansprüche

1. Kaminboden (3) für eine Kolonne (1) zur thermischen Behandlung von fluiden Gemischen mit
einem Auffangboden (4) und
zumindest zwei in dem Auffangboden (4) horizontal beabstandete Kamine (5-1, 5-2), wobei jeder Kamin (5-1, 5-2) einen vertikal ausgerichteten Kaminkörper (6-1, 6-2), der eine Durchtrittsöffnung (7-1, 7-2) durch den Auffangboden (4) bildet, und eine beabstandet von dem Kaminkörper (6-1, 6-2) angeordnete Abdeckeinrichtung (8-1, 8-2) aufweist, und
wobei die Abdeckeinrichtung (8-1, 8-2) in vertikaler Richtung jeweils die Durchtrittsöffnung (7-1, 7-2) überdeckt, und
einer Abschirmung (9), die sich um den Kaminkörper (6-1) eines ersten Kamins (5-1) herum erstreckt, wobei der untere ringförmige Rand (14) der Abschirmung (9) unterhalb des oberen Rands (13) des Kaminkörpers (6-1) des ersten Kamins (5-1) liegt und der obere ringförmige Rand (11) der Abschirmung (9) oberhalb des unteren äußeren Rands (12) der Abdeckeinrichtung (8-1) des ersten Kamins (5-1) liegt oder sich an den unteren äußeren Rand (12) der Abdeckeinrichtung (8-1) des ersten Kamins (5-1) anschließt,
**dadurch gekennzeichnet, dass**
sich die Abschirmung (9) von dem unteren Rand (12) der Abdeckeinrichtung (8-1) des ersten Kamins (5-1) vertikal nach unten bis unterhalb des oberen Rands (13) des Kaminkörpers (6-1) des ersten Kamins (5-1) erstreckt, wobei das Verhältnis (V4/V1) der Höhe (V4) des Kaminkörpers (6-1) zu dem vertikalen Abstand (V1) der oberen Kante (13) des Kaminkörpers (6-1) von der unteren Kante (14) der Abschirmung (9) in einem Bereich von 10 bis 30 liegt;
oder
der obere ringförmige Rand (11) der Abschirmung (9) oberhalb des unteren Rands (12) der Abdeckeinrichtung (8-1) des ersten Kamins (5-1) liegt und die Abschirmung (9) horizontal beabstandet von der Abdeckeinrichtung (8-1) ist, wobei das Verhältnis (V4/V1) der Höhe (V4) des Kaminkörpers (6-1) zu dem vertikalen Abstand (V1) der oberen Kante (13) des Kaminkörpers (6-1) von der unteren Kante (14) der Abschirmung (9) in einem Bereich von 15 bis 40 liegt.

2. Kaminboden (3) nach Anspruch 1, **dadurch gekennzeichnet, dass** zwischen dem Kaminkörper (6-1, 6-2) einerseits und der Abdeckeinrichtung (8-1, 8-2) und der Abschirmung (9) andererseits Gasdurchtrittsbereiche gebildet sind, wobei die Gasdurchtrittsbereiche frei von Einbauten sind.

3. Kaminboden (3) nach Anspruch 1 oder 2, **gekennzeichnet durch** wenigstens eine im Auffangboden (4) angeordnete Ablauföffnung (17), über die Flüssigkeit vom Auffangboden (4) in einen Bereich unterhalb des Kaminbodens (3) abführbar ist.

4. Kaminboden (3) nach einem der vorhergehenden Ansprüche, **dadurch gekennzeichnet, dass** die Abdeckeinrichtung (8-1) von einer Mittelachse des Kaminkörpers (5-1) zu ihrem äußeren ringförmigen Rand (12), der in horizontaler Richtung außerhalb der von dem Kaminkörper (5-1) gebildeten Durchtrittsöffnung (7-1) liegt, nach unten geneigt ist.

5. Kaminboden (3) nach einem der vorhergehenden Ansprüche, **dadurch gekennzeichnet, dass** der Kaminkörper (6-1) im Querschnitt kreisförmig ist.

6. Kaminboden (3) nach einem der vorhergehenden Ansprüche, **dadurch gekennzeichnet, dass** der Kaminkörper (6-1) im Querschnitt rechteckig, insbesondere quadratisch ist.

7. Kaminboden (3) nach einem der vorhergehenden Ansprüche, **dadurch gekennzeichnet, dass**, wenn sich die Abschirmung (9) von dem unteren Rand (12) der Abdeckeinrichtung (8-1) des ersten Kamins (5-1) vertikal nach unten bis unterhalb des oberen Rands (13) des Kaminkörpers (6-1) des ersten Kamins (5-1) erstreckt, das Verhältnis (H1/V1) des horizontalen Abstands (H1) des Kaminkörpers (6-1) von der Abschirmung (9) zu dem vertikalen Abstand (V1) der oberen Kante (13) des Kaminkörpers (6-1) von der unteren Kante (14) der Abschirmung (9) in einem Bereich von 1,0 bis 1,5 liegt.

8. Kaminboden (3) nach einem der Ansprüche 1 bis 6, **dadurch gekennzeichnet, dass**, wenn der obere ringförmige Rand (11) der Abschirmung (9) oberhalb des unteren Rands (12) der Abdeckeinrichtung (8-1) des ersten Kamins (5-1) liegt und die Abschirmung (9) horizontal beabstandet von der Abdeckeinrichtung (8-1) ist, das Verhältnis (H1/V1) des horizontalen Abstands (H1) des Kaminkörpers (6-1) von der Abschirmung (9) zu dem vertikalen Abstand (V1) der oberen Kante (13) des Kaminkörpers (6-1) von der unteren Kante (14) der Abschirmung (9) in einem Bereich von 2,0 bis 4,0 liegt.

9. Kaminboden (3) nach einem der Ansprüche 1 bis 6 oder 8, **dadurch gekennzeichnet, dass**, wenn der obere ringförmige Rand (11) der Abschirmung (9) oberhalb des unteren Rands (12) der Abdeckeinrichtung (8-1) des ersten Kamins (5-1) liegt und die Abschirmung (9) horizontal beabstandet von der Abdeckeinrichtung (8-1) ist, der obere ringförmige Rand (11) der Abschirmung (9) oberhalb des unteren Rands (12) und unterhalb des höchsten Punktes (15-1) der Abdeckeinrichtung (8-1) liegt.

10. Kaminboden (3) nach einem der Ansprüche 1 bis 6, 8 oder 9, **dadurch gekennzeichnet, dass**, wenn der obere ringförmige Rand (11) der Abschirmung (9) oberhalb des unteren Rands (12) der Abdeckeinrichtung (8-1) des ersten Kamins (5-1) liegt und die Abschirmung (9) horizontal beabstandet von der Abdeckeinrichtung (8-1) ist, das Verhältnis (H3/V5) des horizontalen Abstands H3 des höchsten Punktes (15-2) der Abdeckeinrichtung (8-2) des benachbarten Kamins (5-2), der oberhalb der oberen Kante (11) der Abschirmung (9) liegt, zu dem vertikalen Abstand (V5) der oberen Kante (11) der Abschirmung (9) von dem höchsten Punkt (15-2) der Abdeckeinrichtung (8-2) des benachbarten Kamins (5-2), der oberhalb der oberen Kante (11) der Abschirmung (9) liegt, in einem Bereich von 20 bis 60 liegt.

11. Kaminboden (3) nach einem der vorhergehenden Ansprüche, **dadurch gekennzeichnet, dass** das Verhältnis aus der Querschnittsfläche, die von dem Kaminkörper (6-1) gebildet wird, zu der Querschnittsfläche, die zwischen der Abschirmung (9) und dem Kaminkörper (6-1) gebildet wird, in einem Bereich von 0,5 bis 10 liegt.

12. Kaminboden (3) nach einem der vorhergehenden Ansprüche, **dadurch gekennzeichnet, dass** das Verhältnis aus der Querschnittsfläche, die von dem Kaminkörper (6-1) gebildet wird, zu der Querschnittsfläche, die zwischen der Abschirmung (9) und dem Kaminkörper (6-1) gebildet wird, in einem Bereich von 1 bis 5 liegt.

13. Kolonne (1) zur thermischen Behandlung eines fluiden Gemischs mit einem zylindrischen, vertikal ausgerichteten Kolonnenkörper (2), der einen Kolonnenhohlraum (16) bildet, **gekennzeichnet durch** einen im Kolonnenhohlraum (16) angeordneten Kaminboden (3) nach einem der Ansprüche 1 bis 12.

14. Kolonne (1) nach Anspruch 13, **gekennzeichnet durch** eine in dem Kolonnenkörper (2) oberhalb des Auffangbodens (4) oder zwischen einer Stirnfläche des Auffangbodens (4) und dem Kolonnenkörper (2) angeordnete Ablauföffnung (17), über die Flüssigkeit vom Auffangboden (4) in einen Bereich unterhalb des Kaminbodens (3) abführbar ist.

15. Kolonne (1) nach Anspruch 14, **dadurch gekennzeichnet, dass** die Ablauföffnung (17) in dem Kolonnenkörper unmittelbar oberhalb des tiefsten Bereichs (L1) der vom Auffangboden (4) gebildeten Auffangfläche (19) angeordnet ist.

16. Kolonne (1) nach Anspruch 14 oder 15, **dadurch gekennzeichnet, dass** das Verhältnis des vertikalen Abstands des tiefsten Bereichs (L1) der Auffangfläche (19) von der unteren Kante (18) der Ablauföffnung (17) zu dem vertikalen Abstand des tiefsten Bereichs (L1) der Auffangfläche (19) von der unteren Kante (14) der Abschirmung (9) in einem Bereich von 0 bis 0,5 liegt, insbesondere in einem Bereich von 0 bis 0,3 liegt, bevorzugt in einem Bereich von 0 bis 0,1 liegt.

## Claims

1. A chimney tray (3) for a column (1) for thermal treatment of fluid mixtures, comprising
a collecting tray (4) and
at least two chimneys (5-1, 5-2) spaced apart horizontally in the collecting tray (4), where each chimney (5-1, 5-2) forms a vertically aligned chimney body (6-1, 6-2) which forms a passage orifice (7-1, 7-2) through the collecting tray (4), and has a cover unit (8-1, 8-2) arranged spaced apart from the chimney body (6-1, 6-2), and
where the cover unit (8-1, 8-2) covers the respective passage orifice (7-1, 7-2) in the vertical direction, and a screen (9) which extends around the chimney body (6-1) of a first chimney (5-1), with the lower annular edge (14) of the screen (9) below the upper edge (13) of the chimney body (6-1) of the first chimney (5-1) and the upper annular edge (11) of the screen (9) above the lower outer edge (12) of the cover unit (8-1) of the first chimney (5-1) or adjoining the lower outer edge (12) of the cover unit (8-1) of the first chimney (5-1),
wherein
the screen (9) extends vertically downward from the lower edge (12) of the cover unit (8-1) of the first chimney (5-1) to below the upper edge (13) of the chimney body (6-1) of the first chimney (5-1), where the ratio (V4/V1) of the height (V4) of the chimney body (6-1) to the vertical distance (V1) of the upper edge (13) of the chimney body (6-1) from the lower edge (14) of the screen (9) is within a range from 10 to 30;
or
the upper annular edge (11) of the screen (9) is above the lower edge (12) of the cover unit (8-1) of the first chimney (5-1) and the screen (9) is spaced apart horizontally from the cover unit (8-1), where the ratio (V4/V1) of the height (V4) of the chimney body (6-1) to the vertical distance (V1) of the upper edge (13) of the chimney body (6-1) from the lower edge (14) of the screen (9) is within a range from 15 to 40.

2. The chimney tray (3) according to claim 1, wherein between the chimney body (6-1, 6-2) on the one hand and the cover unit (8-1, 8-2) and the screen (9) on the other, gas passage regions are formed, the gas passage regions being free from internals.

3. The chimney tray (3) according to claim 1 or 2, **characterized by** at least one outlet orifice (17) which is arranged in the collecting tray (4) and via which liquid from the collecting tray (4) can be taken off into a region below the chimney tray (3).

4. The chimney tray (3) according to any of the preceding claims, wherein the cover unit (8-1) is inclined downward from a center axis of the chimney body (5-1) toward its outer annular edge (12) which lies in the horizontal direction outside the passage orifice (7-1) formed by the chimney body (5-1).

5. The chimney tray (3) according to any of the preceding claims, wherein the chimney body (6-1) has a circular cross section.

6. The chimney tray (3) according to any of the preceding claims, wherein the chimney body (6-1) has a rectangular, especially square, cross section.

7. The chimney tray (3) according to any of the preceding claims, wherein, when the screen (9) extends vertically downward from the lower edge (12) of the cover unit (8-1) of the first chimney (5-1) to below the upper edge (13) of the chimney body (6-1) of the first chimney (5-1), the ratio (H1/V1) of the horizontal distance (H1) of the chimney body (6-1) from the screen (9) to the vertical distance (V1) of the upper edge (13) of the chimney body (6-1) from the lower edge (14) of the screen (9) is within a range from 1.0 to 1.5.

8. The chimney tray (3) according to any of claims 1 to 6, wherein, when the upper annular edge (11) of the screen (9) is above the lower edge (12) of the cover unit (8-1) of the first chimney (5-1) and the screen (9) is spaced apart horizontally from the cover unit (8-1), the ratio (H1/V1) of the horizontal distance (H1) of the chimney body (6-1) from the screen (9) to the vertical distance (V1) of the upper edge (13) of the chimney body (6-1) from the lower edge (14) of the screen (9) is within a range from 2.0 to 4.0.

9. The chimney tray (3) according to any of claims 1 to 6 and 8, wherein, when the upper annular edge (11) of the screen (9) is above the lower edge (12) of the cover unit (8-1) of the first chimney (5-1) and the screen (9) is spaced apart horizontally from the cover unit (8-1), the upper annular edge (11) of the screen (9) is above the lower edge (12) and below the highest point (15-1) of the cover unit (8-1).

10. The chimney tray (3) according to any of claims 1 to 6, 8 and 9, wherein, when the upper annular edge (11) of the screen (9) is above the lower edge (12) of the cover unit (8-1) of the first chimney (5-1) and the screen (9) is spaced apart horizontally from the cover unit (8-1), the ratio (H3/V5) of the horizontal distance H3 of the highest point (15-2) of the cover unit (8-2) of the adjacent chimney (5-2) which is above the upper edge (11) of the screen (9) to the vertical distance (V5) of the upper edge (11) of the screen (9) from the highest point (15-2) of the cover unit (8-2) of the adjacent chimney (5-2) which is above the upper edge (11) of the screen (9) is within a range from 20 to 60.

11. The chimney tray (3) according to any of the preceding claims, wherein the ratio of the cross-sectional area which is formed by the chimney body (6-1) to the cross-sectional area which is formed between the screen (9) and the chimney body (6-1) is within a range from 0.5 to 10.

12. The chimney tray (3) according to any of the preceding claims, wherein the ratio of the cross-sectional area which is formed by the chimney body (6-1) to the cross-sectional area which is formed between the screen (9) and the chimney body (6-1) is within a range from 1 to 5.

13. A column (1) for thermal treatment of a fluid mixture comprising a cylindrical, vertically aligned column body (2) which forms a column cavity (16), **characterized by** a chimney tray (3) according to any of claims 1 to 12, arranged in the column cavity (16).

14. The column (1) according to claim 13, **characterized by** an outlet orifice (17) which is arranged in the column body (2) above the collecting tray (4) or between an end face of the collecting tray (4) and the column body (2), and via which liquid can be taken from the collecting tray (4) into a region below the chimney tray (3).

15. The column (1) according to claim 14, wherein the outlet orifice (17) in the column body is arranged directly above the lowest region (L1) of the collecting area (19) formed by the collecting tray (4).

16. The column (1) according to claim 14 or 15, wherein the ratio of the vertical distance of the lowest region (L1) of the collecting area (19) from the lower edge (18) of the outlet orifice (17) to the vertical distance of the lowest region (L1) of the collecting area (19) from the lower edge (14) of the screen (9) is in a range from 0 to 0.5, especially in a range from 0 to 0.3, preferably in a range from 0 to 0.1.

## Revendications

1. Plateau de cheminée (3) pour une colonne (1) pour le traitement thermique de mélanges fluides avec
un plateau de collecte (4) et
au moins deux cheminées (5-1, 5-2) espacées horizontalement dans le plateau de collecte (4), chaque cheminée (5-1, 5-2) présentant un corps de cheminée (6-1, 6-2) orienté verticalement, qui forme une ouverture de passage (7-1, 7-2) à travers le plateau de collecte (4), et un dispositif de recouvrement (8-1, 8-2) agencé à distance du corps de cheminée (6-1, 6-2), et
le dispositif de recouvrement (8-1, 8-2) recouvrant respectivement l'ouverture de passage (7-1, 7-2) dans la direction verticale, et
un écran (9) qui s'étend autour du corps de cheminée (6-1) d'une première cheminée (5-1), le bord annulaire inférieur (14) de l'écran (9) étant situé en dessous du bord supérieur (13) du corps de cheminée (6-1) de la première cheminée (5-1) et le bord annulaire supérieur (11) de l'écran (9) étant situé au-dessus du bord extérieur inférieur (12) du dispositif de recouvrement (8-1) de la première cheminée (5-1) ou se raccordant au bord extérieur inférieur (12) du dispositif de recouvrement (8-1) de la première cheminée (5-1),
**caractérisé en ce que**
l'écran (9) s'étend verticalement vers le bas depuis le bord inférieur (12) du dispositif de recouvrement (8-1) de la première cheminée (5-1) jusqu'en dessous du bord supérieur (13) du corps de cheminée (6-1) de la première cheminée (5-1), le rapport (V4/V1) entre la hauteur (V4) du corps de cheminée (6-1) et la distance verticale (V1) entre le bord supérieur (13) du corps de cheminée (6-1) et le bord inférieur (14) de l'écran (9) se situant dans une plage de 10 à 30 ;
ou
le bord annulaire supérieur (11) de l'écran (9) est situé au-dessus du bord inférieur (12) du dispositif de recouvrement (8-1) de la première cheminée (5-1) et l'écran (9) est espacé horizontalement du dispositif de recouvrement (8-1), le rapport (V4/V1) entre la hauteur (V4) du corps de cheminée (6-1) et la distance verticale (V1) entre le bord supérieur (13) du corps de cheminée (6-1) et le bord inférieur (14) de l'écran (9) se situant dans une plage de 15 à 40.

2. Plateau de cheminée (3) selon la revendication 1, **caractérisé en ce que** des zones de passage de gaz sont formées entre le corps de cheminée (6-1, 6-2) d'une part et le dispositif de recouvrement (8-1, 8-2) et l'écran (9) d'autre part, les zones de passage de gaz étant exemptes d'éléments internes.

3. Plateau de cheminée (3) selon la revendication 1 ou 2, **caractérisé par** au moins une ouverture d'écoulement (17) agencée dans le plateau de collecte (4), par l'intermédiaire de laquelle du liquide peut être évacué du plateau de collecte (4) dans une zone en dessous du plateau de cheminée (3).

4. Plateau de cheminée (3) selon l'une quelconque des revendications précédentes, **caractérisé en ce que** le dispositif de recouvrement (8-1) est incliné vers le bas à partir d'un axe central du corps de cheminée (5-1) vers son bord annulaire extérieur (12), qui est situé dans la direction horizontale à l'extérieur de l'ouverture de passage (7-1) formée par le corps de cheminée (5-1).

5. Plateau de cheminée (3) selon l'une quelconque des revendications précédentes, **caractérisé en ce que** le corps de cheminée (6-1) a une section transversale circulaire.

6. Plateau de cheminée (3) selon l'une quelconque des revendications précédentes, **caractérisé en ce que** le corps de cheminée (6-1) a une section transversale rectangulaire, notamment carrée.

7. Plateau de cheminée (3) selon l'une quelconque des revendications précédentes, **caractérisé en ce que**, lorsque l'écran (9) s'étend verticalement vers le bas depuis le bord inférieur (12) du dispositif de recouvrement (8-1) de la première cheminée (5-1) jusqu'en dessous du bord supérieur (13) du corps de cheminée (6-1) de la première cheminée (5-1), le rapport (H1/V1) entre la distance horizontale (H1) entre le corps de cheminée (6-1) et l'écran (9) et la distance verticale (V1) entre le bord supérieur (13) du corps de cheminée (6-1) et le bord inférieur (14) de l'écran (9) se situe dans une plage de 1,0 à 1,5.

8. Plateau de cheminée (3) selon l'une quelconque des revendications 1 à 6, **caractérisé en ce que**, lorsque le bord annulaire supérieur (11) de l'écran (9) est situé au-dessus du bord inférieur (12) du dispositif de recouvrement (8-1) de la première cheminée (5-1) et que l'écran (9) est espacé horizontalement du dispositif de recouvrement (8-1), le rapport (H1/V1) entre la distance horizontale (H1) entre le corps de cheminée (6-1) et l'écran (9) et la distance verticale (V1) entre le bord supérieur (13) du corps de cheminée (6-1) et le bord inférieur (14) de l'écran (9) se situe dans une plage de 2,0 à 4,0.

9. Plateau de cheminée (3) selon l'une quelconque des revendications 1 à 6 ou 8, **caractérisé en ce que**, lorsque le bord annulaire supérieur (11) de l'écran (9) est situé au-dessus du bord inférieur (12) du dispositif de recouvrement (8-1) de la première cheminée (5-1) et que l'écran (9) est espacé horizontalement du dispositif de recouvrement (8-1), le bord annulaire supérieur (11) de l'écran (9) est situé au-dessus du bord inférieur (12) et au-dessous du point le plus haut (15-1) du dispositif de recouvrement (8-1).

10. Plateau de cheminée (3) selon l'une quelconque des revendications 1 à 6, 8 ou 9, **caractérisé en ce que**, lorsque le bord annulaire supérieur (11) de l'écran (9) est situé au-dessus du bord inférieur (12) du dispositif de recouvrement (8-1) de la première cheminée (5-1) et que l'écran (9) est espacé horizontalement du dispositif de recouvrement (8-1), le rapport (H3/V5) entre la distance horizontale H3 entre le point le plus haut (15-2) du dispositif de recouvrement (8-2) de la cheminée adjacente (5-2), qui se situe au-dessus du bord supérieur (11) de l'écran (9), et la distance verticale (V5) entre le bord supérieur (11) de l'écran (9) et le point le plus haut (15-2) du dispositif de recouvrement (8-2) de la cheminée adjacente (5-2), qui se situe au-dessus du bord supérieur (11) de l'écran (9), se situe dans une plage de 20 à 60.

11. Plateau de cheminée (3) selon l'une quelconque des revendications précédentes, **caractérisé en ce que** le rapport entre la surface de section transversale formée par le corps de cheminée (6-1) et la surface de section transversale formée entre l'écran (9) et le corps de cheminée (6-1) se situe dans une plage de 0,5 à 10.

12. Plateau de cheminée (3) selon l'une quelconque des revendications précédentes, **caractérisé en ce que** le rapport entre la surface de section transversale formée par le corps de cheminée (6-1) et la surface de section transversale formée entre l'écran (9) et le corps de cheminée (6-1) se situe dans une plage de 1 à 5.

13. Colonne (1) pour le traitement thermique d'un mélange fluide avec un corps de colonne cylindrique (2) orienté verticalement, qui forme une cavité de colonne (16), **caractérisée par** un plateau de cheminée (3) selon l'une quelconque des revendications 1 à 12, agencé dans la cavité de colonne (16) .

14. Colonne (1) selon la revendication 13, **caractérisée par** une ouverture d'écoulement (17) agencée dans le corps de colonne (2) au-dessus du plateau de collecte (4) ou entre une surface frontale du plateau de collecte (4) et le corps de colonne (2), par l'intermédiaire de laquelle du liquide peut être évacué du plateau de collecte (4) dans une zone au-dessous du plateau de cheminée (3).

15. Colonne (1) selon la revendication 14, **caractérisée en ce que** l'ouverture d'écoulement (17) est agencée dans le corps de colonne directement au-dessus de la zone la plus basse (L1) de la surface de collecte (19) formée par le plateau de collecte (4).

16. Colonne (1) selon la revendication 14 ou 15, **caractérisée en ce que** le rapport entre la distance verticale entre la zone la plus basse (L1) de la surface de collecte (19) et le bord inférieur (18) de l'ouverture d'écoulement (17) et la distance verticale entre la zone la plus basse (L1) de la surface de collecte (19) et le bord inférieur (14) de l'écran (9) se situe dans une plage de 0 à 0,5, notamment dans une plage de 0 à 0,3, de préférence dans une plage de 0 à 0,1.
